(19) Europäisches Patentamt
European Patent Office
Office européen des brevets

(11) Publication number: 0 019 951 B1

(12) **EUROPEAN PATENT SPECIFICATION**

(45) Date of publication of patent specification: 26.05.82

(51) Int. Cl.$^3$: E 04 B 1/54, C 04 B 11/04, C 04 B 39/00 //E04B2/04

(21) Application number: 80200391.3

(22) Date of filing: 28.04.80

(54) **Process for welding gypsum bodies.**

(30) Priority: 15.05.79 BE 57791

(43) Date of publication of application: 10.12.80 Bulletin 80/25

(45) Publication of the grant of the patent: 26.05.82 Bulletin 82/21

(84) Designated Contracting States: AT DE FR GB LU NL

(56) References cited:
DE - C - 117 960
GB - A - 1 065 081

(73) Proprietor: N.V. GYPROC BENELUX, naamloze vennootschap
Merksemsebaan 270
B-2110 Wijnegem (BE)

(72) Inventor: Prie, Joannes Louis Leopold
Zamenhoflaan 6/9
B-2120 Schoten (BE)

(74) Representative: Donné, Eddy
M.F.J.Bockstael Arenbergstraat 13
B-2000 Anvers (BE)

EP 0 019 951 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Process for welding gypsum bodies

The present invention covers a procss for the welding of gypsum.

Gypsum is at present widely applied in the building industry, where gypsum board or especially gypsum plasterboard is the most suitable material for partition walls or wall and ceiling lining. Such boards are widely used, both in traditional and pre-fab building.

Although many means exist already to fix these boards together, the necessity is felt to have the disposal of a process to weld gypsum to gypsum. This is the case e.g. when butt ends of plasterboards are to be bevelled according to a process disclosed in the Applicant's Belgian Patent No. 867.143. Said process enables the butt ends of plasterboards to be bevelled without damaging the strong paper wrapping and consists of providing, after manufacture of the boards, sufficiently deep and wide saw cuts over the entire length of the butt ends, filling up the cuts with a suitable glue and subsequently pressing the fork-shaped butt ends of the boards together until solidification of said glue.

This process has proved most efficient in practice, but filling the saw cuts with glue appears to be rather complicated in certain cases, whereas the hardening process, dependent on the kind of glue used, is relatively slow in progress. Therefore the Applicant has searched for a simple as well as cheap solution to weld gypsum to gypsum quicker and more efficiently.

Thus the Applicant found that, unlike the usual methods requiring adhesives, cement and the like the intrinsic physical properties of gypsum can be used in a very simple way to obtain a strong weld.

As is generally known, gypsum mostly appears as the mono-crystal dihydrate $CaSO_4.2H_2O$, a hard and solid mass, which is only little soluble in water.

Moreover it is known that, depending on temperature, pressure and heating time, the crystal water may be completely or partially extracted from the gypsum.

When gypsum is critically heated, up to a temperature of about 160° Centigrade, hemi- or half-hydrate, possibly soluble hexagonal anhydride, sometimes called burnt gypsum, is formed. Hemihydrate appears as a white powder and when after cooling down it is again contacted by water, the microcrystals will dissolve and re-crystallize as dihydrate, which involves an increase in volume and integration of long needles into a hard mass. Hemihydrate absorbs water particularly fast and recrystallization into a hard solid mass occurs very quickly.

The Applicant found that the reversible process:

$$CaSO_4.2H_2O \rightleftharpoons CaSO_4.\tfrac{1}{2}H_2O + 1\tfrac{1}{2}H_2O$$

can be favourably applied for the welding of gypsum.

In practice, critical spot-heating of gypsum up to about 100 to 200° Centigrade can be effected in different ways and the most appropriate method will probably depend on the specific application.

Thus the friction heat set free during saw cutting in the butt ends of plasterboards may e.g. be used for partial de-watering of the gypsum provided however that said friction heat actually reaches the desired dewatering temperature. In the saw cut, the powdery hemihydrate will then arise, which is brought into contact with water, so that the dihydrate reappears locally. Then it is a matter of quickly bringing together the parts to be welded before the dihydrate weld solidifies and hardens.

In the present case it may be necessary, depending on the amount of heat set free whilst sawing, to cool down the saw cut so as to keep the gypsum temperature low enough to prevent formation of insoluble (orthorhombic) anhydrite. This cooling operation may e.g. be favourably effected by using suitable means to introduce water into the saw cut during sawing. This cooling water will then be partially re-absorbed by the hemihydrate to build up the weld as soon as the temperature has lowered sufficiently.

However, if the temperature does not rise high enough during sawing, it will do to feed a suitable amount of water after sawing is finished.

Also, after completing the afore-mentioned saw cut, either having cooled it or not, the saw cut sides may be suitably heated, e.g. by radiation heat, in order to obtain the same result as described above.

Said radiation heat could e.g. be obtained by heating the afore-mentioned saw cut side by means of an incandescent heater element or the like.

The afore-mentioned sides could also be heated by convection.

Of course the process described above by way of example could be applied with equal advantage for a great many other applications where gypsum welding is needed and possibly by using practical alternatives to the process according to the invention, which however do not exceed its specific scope.

## Claims

1. Process for gypsum welding, characterized in that it consists of spot-heating of the gypsum parts to be welded, until reaching the dehydration temperature; adding water and finally pressing together the aforementioned gypsum parts until complete hardening of the weld.

2. Process according to claim 1, characterized in that said dehydration temperature ranges between 100 and 200° Centigrade.

3. Process according to claim 1 or 2, characterized in that the parts to be welded are spot-heated by friction heat.

4. Process according to claim 1 or 2, characterized in that the parts to be welded are spot-heated by radiation heat.

5. Process according to claim 1 or 2, characterized in that the parts to be welded are spot-heated by convection heat.

6. Process according to claim 3, characterized in that said friction heat arises from sawing.

7. Process according to claim 4, characterized in that said radiation heat is obtained by spot-heating the parts to be welded by an incandescent heater element.

8. Process according to any one of the above claims, characterized in that water is already added during heating.

9. Process according to claims 1 through 7, characterized in that water is added after the parts to be welded have been brought to a temperature below 100° Centigrade.

**Patentansprüche**

1. Verfahren zum Verschweissen von Gipsgegenständen, dadurch gekennzeichnet, dass es aus den folgenden Stufen besteht : Punktheizung der zu verschweissenden Gipsteile bis zur Entwässerungstemperatur, Wasserzusatz und schliesslich Zusammenpressen der betreffenden Teile bis zur endgültigen Härtung der Schweisstelle.

2. Verfahren gemäss dem Anspruch 1, dadurch gekennzeichnet, dass die Entwässerungstemperatur 100—200°C beträgt.

3. Verfahren gemäss dem Anspruch 1 oder 2, dadurch gekennzeichnet, dass die Punktheizung der zu verschweissenden Teile durch Reibungswärme stattfindet.

4. Verfahren gemäss dem Anspruch 1 oder 2, dadurch gekennzeichnet, dass die Punktheizung der zu verschweissenden Teile durch Strahlungswärme stattfindet.

5. Verfahren gemäss dem Anspruch 1 oder 2, dadurch gekennzeichnet, dass die Punktheizung der zu verschweissenden Teile durch Konvektionswärme stattfindet.

6. Verfahren gemäss dem Anspruch 3, dadurch gekennzeichnet, dass die erforderliche Reibungswärme für das Verschweissen der betreffenden Teile durch Sägen erzeugt wird.

7. Verfahren gemäss dem Anspruch 4, dadurch gekennzeichnet, dass die erforderliche Strahlungswärme für die Punktheizung der zu verschweissenden Teile durch einen Glühstrahler erzeught wird.

8. Verfahren gemäss irgendeinem der vorhergehenden Ansprüche, dadurch gekennzeichnet, dass der Wasserzusatz bereits während der Heizung stattfindet.

9. Verfahren gemäss irgendeinem der vorhergehenden Ansprüche 1—7, dadurch gekennzeichnet, dass der Wasserzusatz nach Heizung der zu verschweissenden Teile bis zu einter unterhalb 100°C liegenden Temperatur stattfindet.

**Revendications**

1. Procèdè pour souder des objets de gypse, caractèrisè en ce qu'il comporte le chauffage par points des parties en gypse à souder jusqu'à la température de déshydration, l'addition d'eau et finalement la réunion sous pression des parties concernées jusqu'au durcissement intégral du joint de soudure.

2. Procédé selon la revendication 1, caractérisé en ce que ladite température de déshydration varie de 100 à 200°C.

3. Procédé selon la revendication 1 ou 2, caractérisé en ce que le chauffage par points des parties à souder s'effectue par frottement.

4. Procédé selon la revendication 1 ou 2, caractérisé en ce que le chauffage par points des parties à souder s'effectue par radiation.

5. Procédé selon la revendication 1 ou 2, caractérisé en ce que le chauffage par points des parties à souder s'effectue par convection.

6. Procédé selon la revendication 3, caractérisé en ce que la chaleur de frottement requise au chauffage par points des parties à souder est engendrée par sciage.

7. Procédé selon la revendication 4, caractérisé en ce que la chaleur rayonnante requise au chauffage par points des parties à souder est émise par unradiateur à incandescence.

8. Procédé selon l'une ou l'autre des revendications précédentes, caractérisé en ce que l'addition d'eau s'effectue déjà pendant le chauffage.

9. Procédé selon l'une ou l'autre des revendications précédentes 1 à 7, caractérisé en ce que l'addition d'eau s'effectue aprés le chauffage des parties à souder à une température inférieure à 100°C.